# DEMANDE DE BREVET EUROPEEN

(11) **EP 0 753 417 A1**
(43) Date de publication de la demande: **15.01.1997**
(21) Numéro de dépôt: 96401544.0
(22) Date de dépôt: 12.07.1996
(51) Int. Cl.: B44C 5/04, E04F 13/02, B44D 2/00

(54) **Revêtement mural apprêté en vue d'un traitement ultérieur séparé avec un glacis, et nécessaire pour sa mise en oeuvre**

(30) Priorité: 12.07.1995 FR 9508466
(71) Demandeur: Pasquotti, Jean-Jacques, 93360 Neuilly Plaisance (FR)
(72) Inventeur: Pasquotti, Jean-Jacques, 93360 Neuilly Plaisance (FR)
(74) Mandataire: Dupuis-Latour, Dominique

(57) **Abrégé**

La présente invention concerne un revêtement mural apprêté en vue d'un traitement ultérieur, comprenant un support avec une enduction de plâtre hydraté et d'un liant, caractérisé en ce que l'enduction comporte en outre une quantité de pigments appliqués de façon irrégulière ou suivant un motif prédéterminé pour permettre, par application ultérieure séparée d'un glacis, la mise en oeuvre à volonté de différentes impressions par absorption différentielle du glacis par les pigments.

## Description

La présente invention concerne un revêtement mural apprêté en vue d'un traitement ultérieur séparé avec un glacis, comprenant un support avec une enduction de plâtre hydraté et d'un liant.

On connaît dans la technique de nombreux revêtements muraux constitués principalement d'un tel support avec enduction de plâtre ou gypse hydraté et d'un liant.

Ces revêtements muraux sont notamment réalisés à partir de nappes support de fibres de verre en produits tissés ou non tissés.

Les nappes de fibres de verre reçoivent habituellement une enduction de plâtre ou gypse hydraté, c'est-à-dire que le gypse ou plâtre est malaxé dans un milieu aqueux avec un liant pour souder entre elles les molécules.

Le liant généralement utilisé est un liant acrylique ou un liant vinylique.

Ces revêtements muraux, couramment disponibles dans le commerce, donnent entière satisfaction mais sont destinés à être recouverts d'une couche de peinture uniforme. Le prix de revient en est grevé d'autant, et le résultat est en outre limité à une couleur uniforme, sans motif ni effet d'impression à la manière d'un papier peint.

La présente invention répond aux besoins manifestés depuis de nombreuses années par les utilisateurs en proposant un revêtement mural apprêté qui peut être coloré par un glacis (ou "lasure") après sa pose par un utilisateur à n'importe quel moment ultérieur choisi, à la couleur désirée et en procurant une grande variété de motifs, irréguliers ou aléatoires.

À cet effet, la présente invention propose un revêtement mural apprêté en vue d'un traitement ultérieur, comprenant un support avec une enduction de plâtre hydraté et d'un liant, caractérisé en ce que l'enduction comporte en outre une quantité de pigments appliqués de façon irrégulière ou suivant un motif prédéterminé pour permettre, par application ultérieure séparée d'un glacis, la mise en oeuvre à volonté de différentes impressions par absorption différentielle du glacis par les pigments.

Selon un certain nombre de formes de réalisation avantageuses :
- le revêtement comporte en outre une émulsion de polyuréthanne, notamment une émulsion appliquée sur l'enduction de plâtre hydraté et de liant ;
- le liant est une résine vinylique ou acrylique ;
- le support est une nappe de fibres de verre, tissée ou non ;
- les pigments sont choisis parmi les pigments minéraux d'oxyde de fer de granulométrie conprise entre 0,1 et 1,0 µm ;
- le revêtement comprend, sur la base du poids du revêtement final par mètre carré, de 8 à 10 % de support, de 80 à 83 % de plâtre hydraté et de liant, de 2 à 4 % de pigments et de 1 à 3 % d'émulsion de polyuréthanne ;
- le rapport pondéral du liant au plâtre hydraté est compris dans la gamme de 1:4 à1:10 ;
- le revêtement comprend, pour 100 g de produit au mètre carré : 50 g de nappe de fibres de verre, 415 g de plâtre hydraté et de liant, 20 g de pigments et 15 g d'émulsion de polyuréthanne ;

La présente invention vise également un nécessaire comprenant en combinaison un revêtement mural, par exemple, sous forme de feuilles ou de rouleau, et d'autre part un flacon de glacis pour l'application ultérieure par un utilisateur dudit glacis sur le revêtement mural.

Dans le revêtement mural de présente invention, un nappe fibreuse de verre peut constituer le substrat (mais un autre type de substrat pourrait également être envisagé). L'enduction de plâtre ou gypse hydraté à raison de 80 % de plâtre ou gypse hydraté et 20 % de liant qui est une résine acrylique ou vinylique permet de souder entre elles les molécules et d'avoir un produit approprié.

L'application de pigments en surface sur l'enduction de plâtre ou gypse hydraté et de liant va permettre l'application ultérieure par un utilisateur et chez un utilisateur d'un glacis de n'importe quelle coloration ou impression souhaitée. L'émulsion de polyuréthanne a, quant à elle, un effet de surface anti-graffiti empêchant la pénétration de graffiti sur le revêtement mural.

L'invention sera mieux comprise à l'aide de l'exemple non limitatif ci-après.

### Exemple

On utilise dans cet exemple, calculé sur la base du poids du revêtement final, une nappe fibreuse de verre tissée ou non à raison d'environ 10 % ; on applique une enduction de plâtre hydraté et de liant à raison d'environ 80 %, on incorpore environ 40 % de pigments et on applique enfin une émulsion de polyuréthanne à raison d'environ 3 %.

Les pigments peuvent être, typiquement, des pigments minéraux d'oxyde de fer tels que ceux commercialisés par Bayer par exemple sous les références 130, 130 B, 160,180 et 140M (oxyde de fer rouge) ou 318 (oxyde de fer noir) ; ces indications ne sont sont cependant bien entendu en aucune façon limitatives.

Le revêtement final apprêté permet, une fois posé chez un utilisateur, l'application d'un glacis au tampon, au rouleau, au pinceau et analogues, permettant de révéler la couleur du glacis sur le pigment blanc mat, brillant, satiné, perlescent ou bien sur d'autres blancs de pigmentations différentes.

Ce glacis peut par exemple être du type "Tollens lasure solvant" comprenant un liant à base de résines alkydes en solution dans des hydrocarbures aliphatiques ou, de préférence, du type "Tollens Lasure émulsion" comprenant un liant à base de résines alkydes et acryliques en émulsion aqueuse, chacun de ces produits existant en une très grande variété de teintes.

La présente invention fournit donc d'une façon simple et pratique un revêtement mural apprêté en vue d'un traitement ultérieur qui permet de procurer toutes colorations ou impressions grâce à l'incorporation de pigments dans l'enduction de plâtre ou gypse hydraté.

L'utilisateur peut donc appliquer par tout moyen approprié, comme il a été indiqué ci-dessus, le glacis qui procurera tous motifs et couleurs souhaités.

## Revendications

1. Revêtement mural apprêté en vue d'un traitement ultérieur, comprenant une nappe support fibreuse avec une enduction de plâtre hydraté et d'un liant, caractérisé en ce que l'enduction comporte en outre une quantité de pigments appliqués de façon irrégulière ou suivant un motif prédéterminé pour permettre, par application ultérieure séparée d'un glacis, la mise en oeuvre à volonté de différentes impressions par absorption différentielle du glacis par les pigments.

2. Revêtement mural apprêté selon la revendication 1, caractérisé en ce qu'il comporte en outre une émulsion de polyuréthanne.

3. Revêtement mural apprêté selon la revendication 1, caractérisé en ce que 1' émulsion de polyuréthanne est appliquée sur l'enduction de plâtre hydraté et de liant.

4. Revêtement mural apprêté selon la revendication 1, caractérisé en ce que le liant est une résine vinylique ou acrylique.

5. Revêtement mural apprêté selon la revendication 1, caractérisé en ce que le support est une nappe de fibres de verre, tissée ou non.

6. Revêtement mural apprêté selon la revendication 1 ou 3, caractérisé en ce que les pigments sont choisis parmi les pigments minéraux d'oxyde de fer de granulométrie conprise entre 0,1 et 1,0 µm.

7. Revêtement mural apprêté selon la revendication 2, caractérisé en ce qu'il comprend, sur la base du poids du revêtement final par mètre carré, de 8 à 10 % de support, de 80 à 83 % de plâtre hydraté et de liant, de 2 à 4 % de pigments et de 1 à 3 % d'émulsion de polyuréthanne.

8. Revêtement mural apprêté selon l'une des revendications 1 à 7, caractérisé en ce que le rapport pondéral du liant au plâtre hydraté est compris dans la gamme de 1:4 à 1:10.

9. Revêtement mural apprêté selon les revendications 2 et 5 prises en combinaison, caractérisé en ce qu'il comprend, pour 100 g de produit au mètre carré :
- 50 g de nappe de fibres de verre ;
- 415 g de plâtre hydraté et de liant ;
- 20 g de pigments ;
- 15 g d'émulsion de polyuréthanne.

10. Nécessaire comprenant, en combinaison, d'une part un revêtement mural selon l'une des revendications 1 à 9 et d'autre part un flacon de glacis pour l'application ultérieure par un utilisateur de ce glacis sur ledit revêtement mural.
